# EUROPEAN PATENT APPLICATION

(11) **EP 3 226 167 A1**
(43) Date of publication of application: **04.10.2017**
(21) Application number: 17163398.5
(22) Date of filing: 28.03.2017
(51) Int. Cl.: G06F 21/50, G06Q 20/00, G06Q 20/40

(54) **PAYMENT METHOD AND APPARATUS**

(30) Priority: 31.03.2016 CN 201610202066
(71) Applicant: Beijing Xiaomi Mobile Software Co., Ltd., Beijing 100085 (CN)
(72) Inventor: WANG, Chenxi, BEIJING, 100085 (CN); LIU, Ming, BEIJING, 100085 (CN); WANG, Yufei, BEIJING, 100085 (CN)
(74) Representative: Cougard, Jean-Marie

(57) **Abstract**

The present disclosure relates to a payment method and a payment apparatus. The method includes: prohibiting (101) a floating window from being displayed on an interface displayed by a payment application when the payment application is running on foreground; receiving (102) a payment operation triggered by a user on the interface; paying (103) in accordance with the payment operation. In such a way, the terminal may prohibit a fake interface from being displayed when the payment application is running on foreground. Meanwhile, the user may input payment information on the true interface displayed by the payment application, thus the covering virus cannot acquire the payment information using the fake interface, so as to solve the insecurity problem of the payment environment, thereby reaching the effect of improving the security of the payment environment.

## Description

### TECHNICAL FIELD

The present disclosure relates to a computer field, and more particularly to a payment method and a payment apparatus.

### BACKGROUND

With the development of e-commerce, it is more and more popular for a user to pay online with a payment application in a terminal, thus it is more and more important to improve security during the payment.

In the related art, when the user starts the payment application, a covering virus may generate an interface which is the same as a login interface of the payment application and covers the login interface, and the covering virus may acquire an account and a password input on the interface by the user.

### SUMMARY

According to a first aspect of embodiments of the present disclosure, there is provided a payment method, implemented by a terminal (or a payment apparatus), said payment method including:
prohibiting a floating window from being displayed on an interface displayed by a payment application when the payment application is running on foreground;
receiving a payment operation triggered by a user on the interface;
paying in accordance with the payment operation.

In at least one embodiment of the present disclosure, prohibiting a floating window from being displayed on an interface displayed by a payment application includes:
prohibiting the floating window from being displayed on the interface displayed by the payment application via a predetermined system-level privilege.

In at least one embodiment of the present disclosure, the method further includes:
setting up a privilege for prohibiting a third-party application from reading notification class information, in which the third-part application is an application other than the payment application and a system application, and the notification class information is sent from a payment server to the payment application and configured to verify information of the user;
prohibiting the third-party application from reading the notification class information in accordance with the privilege when the payment application is running on the foreground.

In at least one embodiment of the present disclosure, the method further includes:
detecting whether a virus is in the terminal when the payment application is started, in which the virus is configured to steal information input by the user when the payment operation is triggered;
displaying a detecting result on the interface, in which the detecting result is configured to be provided to the user to determine whether to trigger the payment operation.

In at least one embodiment of the present disclosure, detecting whether a virus is in the terminal includes:
detecting whether an application carrying a virus is installed in the terminal, and detecting whether an application running on background receives information carrying a virus;
determining that the virus is in the terminal, when the application carrying a virus is detected to be installed in the terminal or the application running on background is detected to receive information carrying a virus.

In at least one embodiment of the present disclosure, the method further includes:
detecting whether an application is the payment application when starting the application;
triggering an act of prohibiting the floating window from being displayed on the interface displayed by the payment application when the payment application is running on foreground, when the application is detected to be the payment application.

In one particular embodiment, the steps of the payment method are determined by computer program instructions.

Consequently, according to a particular embodiment, the invention is also directed to a computer program for executing the steps of a payment method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of embodiments of the present disclosure, there is provided a payment apparatus (or terminal), including:
a first prohibiting module configured to prohibit a floating window from being displayed on an interface displayed by a payment application when the payment application is running on foreground;
a receiving module configured to receive a payment operation triggered by a user on the interface;
a paying module configured to pay in accordance with the payment operation received by the receiving module.

In at least one embodiment of the present disclosure, the first prohibiting module is further configured to prohibit the floating window from being displayed on the interface displayed by the payment application via a predetermined system-level privilege.

In at least one embodiment of the present disclosure, the apparatus further includes:
a setting-up module configured to set up a privilege for prohibiting a third-party application from reading notification class information, in which the third-part application is an application other than the payment application and a system application, and the notification class information is sent from a payment server to the payment application and configured to verify information of the user;
a second prohibiting module configured to prohibit the third-party application from reading the notification class information in accordance with the privilege set up by the setting-up module when the payment application is running on the foreground.

In at least one embodiment of the present disclosure, the apparatus further includes:
a first detecting module configured to detect whether a virus is in the payment apparatus when the payment application is started, in which the virus is configured to steal information input by the user when the payment operation is triggered;
a displaying module configured to display a detecting result detected by the first detecting module on the interface, in which the detecting result is configured to be provided to the user to determine whether to trigger the payment operation.

In at least one embodiment of the present disclosure, the first detecting module includes:
a detecting sub-module configured to detect whether an application carrying a virus is installed in the terminal, and to detect whether an application running on background receives information carrying a virus;
a determining sub-module configured to determine that the virus is in the terminal, when the application carrying a virus is detected by the detecting sub-module to be installed in the terminal or when the application running on background is detected by the detecting sub-module to receive information carrying a virus.

In at least one embodiment of the present disclosure, the apparatus further includes:
a second detecting module configured to detect whether an application is the payment application when starting the application,
in which the first prohibiting module is further configured to trigger an act of prohibiting the floating window from being displayed on the interface displayed by the payment application when the payment application is running on foreground, when the application is detected by the second detecting module to be the payment application.

According to a third aspect of embodiments of the present disclosure, there is provided a payment device, including:
a processor;
a memory configured to store instructions to be implemented by the processor,
in which the processor is configured to perform the payment method according to the first aspect of embodiments of the present disclosure.

According to a fourth aspect of embodiments of the present disclosure, a computer-readable storage medium is provided. The computer-readable storage medium has stored therein instructions that, when executed by a processor of a device, causes the device to perform the payment method according to the first aspect of embodiments of the present disclosure.

Technical solutions provided by embodiments of the present disclosure may have the following beneficial effects.

By prohibiting the floating window from being displayed on the interface displayed by the payment application, the terminal may prohibit the fake interface, which is generated by the covering virus and similar to the interface displayed by the payment application, from being displayed when the payment application is running on foreground. Meanwhile, the user may input payment information on the true interface displayed by the payment application, thus the covering virus cannot acquire the payment information using the fake interface, so as to solve the insecurity problem of the payment environment caused by that the covering virus generates the fake interface covering the interface displayed by the payment application and acquires the payment information input on the fake interface by the user, thereby reaching the effect of improving the security of the payment environment.

In addition, by detecting whether the application is the payment application when starting the application, and by prohibiting the floating window from being displayed on the interface displayed by the payment application when the application is detected to be the payment application, the terminal will only prohibit the floating window from being displayed on the interface displayed by the payment application when the application running on foreground is the payment application, thus ensuring the security of the payment without prohibiting the floating window from being displayed by other applications in the terminal and improving flexibility of prohibiting the floating window from be displayed by the terminal.

In addition, by detecting whether the virus is in the terminal when the payment application is started, and by displaying the detecting result on the interface displayed by the payment application, the user may implement the payment operation when the detecting results indicates that there is no virus in the terminal, thus improving the security of the payment environment.

In addition, by setting up the privilege for prohibiting the third-party application from reading notification class information, and by prohibiting the third-party application from reading the notification class information in accordance with the privilege when the payment application is running on the foreground, even if the third-party application acquires the account and the password of the user, it may still cannot read a verification code in the notification class information because it cannot read the notification class information received by the terminal, thus the third-party application cannot send the verification code matching with the account and the password of the user to the payment server and the identity verification of the user of the payment operation by the payment server is not passed, thereby solving the insecurity problem of the payment environment caused by that the third-party application reads the verification code in the notification class information and send it to the payment server to pass the identity verification of the user of the payment operation may be solved, so as to improve the security of the payment environment.

It should be understood that, the above general description and following detail description are illustrative and explanatory, and shall not be construed to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a payment method according to an illustrative embodiment of the present disclosure;
Fig. 2 is a flow chart showing a payment method according to another illustrative embodiment of the present disclosure;
Fig. 3 is a flow chart showing a payment method according to another illustrative embodiment of the present disclosure;
Fig. 4 is a block diagram showing a payment apparatus according to an illustrative embodiment of the present disclosure;
Fig. 5 is a block diagram showing a payment apparatus according to an illustrative embodiment of the present disclosure;
Fig. 6 is a block diagram showing a payment device according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

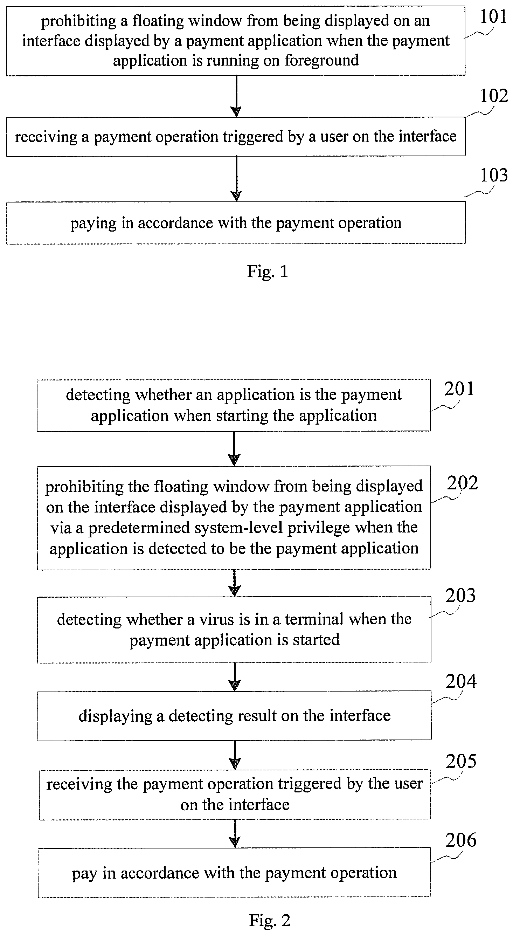

Fig. 1 is a flow chart showing a payment method according to an illustrative embodiment of the present disclosure. The payment method is implemented by a terminal, a device or the like (such as a payment apparatus for instance). As shown in Fig. 1, the payment method includes the followings.

In step 101, a floating window is prohibited from being displayed on an interface displayed by a payment application when the payment application is running on foreground. By "prohibiting" it is meant that a floating window is being blocked so that it cannot be displayed on the interface. The terminal prevents the floating window from being displayed.

As is well known in the art, a floating window is an on-screen window that is always displayed in the front of a screen. A floating window can be displayed in full screen or part of the screen, and is displayed on top of any other application interface (or window) which may be displayed on the screen. A floating window covers for instance a current (or active) interface, such as the interface of a payment application. In a particular example, a floating window can be moved and resized freely. A floating window can for instance be dragged to any position within an application interface or, possibly, even outside the application interface. This is the opposite of a docked window that is fixed in position to the rest of the application interface.

In step 102, a payment operation triggered by a user on the interface is received.

In step 103, a payment is performed in accordance with the payment operation.

In conclusion, according to the payment method provided by the present disclosure, by prohibiting the floating window from being displayed on the interface displayed by the payment application, the terminal may prohibit the fake interface, which is generated by the covering virus and similar to the interface displayed by the payment application, from being displayed when the payment application is running on foreground. Meanwhile, the user may input payment information on the true interface displayed by the payment application, thus the covering virus cannot acquire the payment information using the fake interface, so as to solve the insecurity problem of the payment environment caused by that the covering virus generates the fake interface covering the interface displayed by the payment application and acquires the payment information input on the fake interface by the user, thereby reaching the effect of improving the security of the payment environment.

Fig. 2 is a flow chart showing a payment method according to another illustrative embodiment of the present disclosure. The payment method is implemented by a terminal (or a payment apparatus). As shown in Fig. 2, the payment method includes the followings.

In step 201, it is detected whether an application is the payment application when the application is started.

When the user starts the application installed in the terminal, the terminal may detect whether the application is the payment application. The payment application is configured to be provided to the user to perform operations, such as payment and transfer. The payment application includes a payment client and a payment web, which are not limited on specific forms of the payment application in the embodiments.

The terminal detecting whether the application is the payment application may include: an identifier of the application may be acquired by the terminal; the identifier is detected by the terminal whether to be an identifier of the payment application; and the application is determined by the terminal to be the payment application if the identifier is detected to be the identifier of the payment application. Forms for detecting the application to be the payment application are not limited in the embodiments.

In step 202, when the application is detected to be the payment application, the floating window is prohibited from being displayed on the interface displayed by the payment application via a predetermined system-level privilege.

A system-level privilege may refer to hierarchical protection domains that can be operated by the system. The general user of the terminal cannot operate these domains defined by the system-level privilege.

The interface refers to an interface displayed by the payment application when the payment application is running on foreground. The interface is configured to be provided to the user for inputting payment information and includes at least one of a login interface and a payment interface. If the interface is the login interface, the payment information should be the login account and the login password for logining the payment application; if the interface is the payment interface, the payment information should be the payment account and the payment password used by the user when paying. The floating window refers to another interface displayed on the interface of the terminal.

The covering virus refers to a virus generating a fake interface that covers on and similar to the interface displayed by the payment application. Mechanism for generating the fake interface is the same as that of the floating window.

If there is the virus in the terminal (or if the terminal is infected with the virus), the covering virus may generate the fake interface on the interface displayed by the payment application based on the mechanism for generating the floating window when the payment application is running on foreground. Meanwhile, the user may mistake the fake interface as the interface displayed by the payment application and input the payment information in this fake interface, thus the covering virus may acquire the payment information. In the embodiment, by prohibiting the floating window from being displayed on the interface displayed by the payment application, the fake interface generated by the covering virus may be prohibited by the terminal, in such a way, the user may input the payment information in the true interface displayed by the payment application, so that the covering virus cannot acquire the payment information, thus improving the security of the payment environment.

When the terminal prohibits the floating window from being displayed on the interface displayed by the payment application, one possible implementation is to always prohibit the floating window from being displayed on the interface displayed by the terminal via the system-level privilege no matter whether the application running on foreground is the payment application or not. At this time, the floating window cannot be displayed on the interface by other applications except the covering virus, either, which may affect the running of these applications. The system-level privilege is configured to limit the terminal to display the floating window on the interface. The system-level privilege may be set up by the user or may be predetermined by the system, which is not limited in the embodiments.

For example, an app XX manager may remind the user of an occupation situation of a memory of the terminal via displaying the floating window on the interface. If the floating window is always prohibited from being displayed on the interface by the terminal, the floating window of the app XX manager is also prohibited, so that the user cannot learn the occupation situation of the memory of the terminal by the floating window.

Another possible implementing way to prohibit the floating window from being displayed on the interface displayed by the payment application via the system-level privilege when the terminal detects that the application running on foreground is the payment application. At this time, the payment information of the user may be protected from being acquired by the covering virus when the payment application is running on foreground, and meanwhile, the floating windows of other applications can be displayed when the payment application is not running on foreground, thus improve the flexibility for prohibiting the floating window by the terminal. The system-level privilege may be set up by the user when the payment application is downloaded to the terminal or may be predetermined by the system, which is not limited in the embodiments.

For example, the payment application, such as the XX Pay may be running on foreground, at this time the floating window is prohibited from being displayed on the interface displayed by the XX pay at the terminal, so that the fake interface generated by the covering virus is prohibited to be displayed and the payment information of the user cannot be acquired. When the XX pay is not running on foreground, the terminal allows displaying the floating window and the floating window of the app manager may be displayed on the interface.

In step 203, it is detected whether the virus is in the terminal (or whether the terminal is infected with the virus) when the payment application is started.

The virus is a section of executable codes, which is configured to steal information input by the user when the payment operation is triggered by the user. The virus may be the infectious virus such as Trojan, or other non-infectious virus, which is not limited in the embodiments.

For the covering virus, which is possible to be non-detectable by the terminal and is of a same generation mechanism as that of the floating window, in the step 202, by prohibiting the floating window from being displayed on the interface displayed by the payment application, the insecurity problem of the payment environment caused by that the payment information input by the user may be stolen by the fake interface generated by the covering virus may be avoided. Moreover, for the virus detectable by the terminal, it may be detected when the payment application is running on foreground.

Detecting whether a virus is in the terminal (or payment apparatus) includes: detecting whether an application carrying (or infected with) a virus is installed in the terminal, and detecting whether an application running on background receives information carrying (or infected with) a virus; and determining that a virus is in the terminal, when the application carrying a virus is detected to be installed in the terminal or when the application running on background is detected to receive information carrying a virus.

In the embodiments, the security of the payment environment is fully detected in two terms, whether the application installed in the terminal brings a virus and whether the application running on background of the terminal receives information carrying (or infected with) a virus, thus improving the security of the payment environment.

It should be understood that, step 203 may be performed before step 202, or after step 202, or at the same time with step 202, which is not limited in the embodiments.

In step 204, a detecting result is displayed on the interface.

The detecting result is configured to be provided to the user to determine whether to trigger the payment operation. A display form of the detecting result may be displaying an interface with different colours, in which different colors represent different detecting results; or displaying prompt information on the interface, the prompt information including the detecting result. The display forms of the detecting result are not limited in the embodiments.

For example, when the display form of the detecting result is displaying the interface with specific colour, a red interface represents there is the virus in the terminal and the green one represents there is no virus in the terminal.

For other example, when the display form of the detecting result is displaying the prompt information on the interface, a content of the prompt information may be "virus is present, please search and remove first" or "no virus is detected, please perform".

In step 205, the payment operation triggered by the user is received.

In step 206, the payment is performed in accordance with the payment operation.

In conclusion, according to the payment method provided by the present disclosure, by prohibiting the floating window from being displayed on the interface displayed by the payment application, the terminal may prohibit the fake interface, which is generated by the covering virus and similar to the interface displayed by the payment application, from being displayed when the payment application is running on foreground. Meanwhile, the user may input payment information on the true interface displayed by the payment application, thus the covering virus cannot acquire the payment information using the fake interface, so as to solve the insecurity problem of the payment environment caused by that the covering virus generates the fake interface covering the interface displayed by the payment application and acquires the payment information input on the fake interface by the user, thereby reaching the effect of improving the security of the payment environment.

In addition, by detecting whether the application is the payment application when starting the application, and by prohibiting the floating window from being displayed on the interface displayed by the payment application when the application is detected to be the payment application, the terminal will only prohibit the floating window from being displayed on the interface displayed by the payment application when the application running on foreground is the payment application, thus ensuring the security of the payment without prohibiting the floating window from being displayed by other applications in the terminal and improving flexibility of prohibiting the floating window from be displayed by the terminal.

In addition, by detecting whether the virus is in the terminal when the payment application is started, and by displaying the detecting result on the interface displayed by the payment application, the user may implement the payment operation when the detecting results indicates that there is no virus in the terminal, thus improving the security of the payment environment.

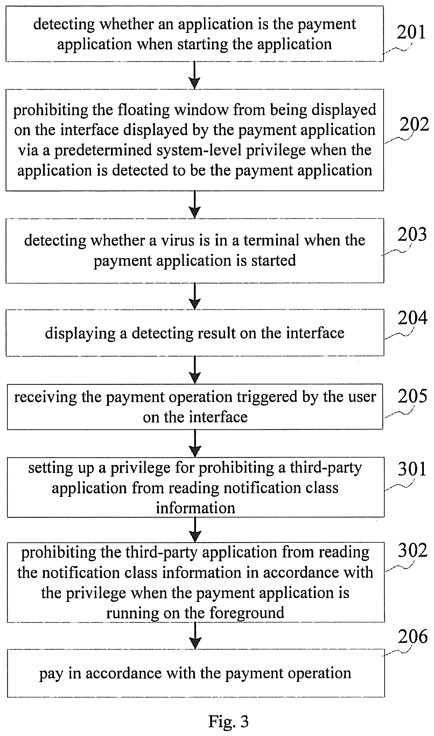

In a particular example, as shown in Fig. 3, in order to avoid a security problem because the terminal cannot detect all viruses, before step 206, the payment method may further include the followings.

In step 301, a privilege for prohibiting a third-party application from reading notification class information is set up.

The third-part application is an application other than the payment application and a system application, and the notification class information is sent from a payment server to the payment application and configured to verify information of the user.

When setting up the privilege for prohibiting the third-party application from reading the notification class information, one possible implementation is that when the third-party application is installed, the privilege for prohibiting the third-party application from reading the notification class information is set up by the user, and another possible implementation is that all the third-party application are prohibited from reading the notification class information by a terminal set-up. Forms and times of setting up the privilege for prohibiting the third-party application from reading the notification class information are not limited to these embodiments.

In step 302, the third-party application is prohibited from reading the notification class information in accordance with the privilege when the payment application is running on the foreground.

After the user triggers the payment operation on the interface displayed by the payment application, the payment application will send a payment request carrying (or including) an identifier of the user to the payment server. After the payment server receives the payment request, it may send the notification class information including a section of verification codes to the terminal bound with (or associated with) the identifier of the user. After the user input the verification code on the interface, the payment application sends it to the payment server for verification. The payment server receives the verification code and detects whether the code received is the same as the code included in the notification class information. If the codes are same, the identity of the user performing the payment operation is certificated. The identifier of the user is usually a login account of the payment application.

If the third-party application is able to read the notification information sent by the payment server and acquires the account and the password of the user, it may login the account and the password on background, and sends a payment request to the payment server, and the notification class information may be sent back to the terminal by the payment server, meanwhile the third-party application may read the notification class information and send the verification code included in the notification class information to the payment server. In such a way, the identity of the user performing the payment operation may also by certificated by the payment server, thus causing the security problem of the payment environment.

It should be understood that, the account described herein may be a login account used to login the payment application, or may be a payment account used to perform the payment. Accordingly, the password described herein may be a login password used to login the payment application, or may be a payment password used to perform the payment. Types of account and password are not limited in the embodiments.

In the embodiments of the present disclosure, by setting up the privilege for prohibiting the third-party application from reading notification class information, and by prohibiting the third-party application from reading the notification class information in accordance with the privilege when the payment application is running on the foreground, even if the third-party application acquires the account and the password of the user, it may still cannot read a verification code in the notification class information because it cannot read the notification class information received by the terminal, thus the third-party application cannot send the verification code matching with the account and the password of the user to the payment server and the identity verification of the user of the payment operation by the payment server is not passed, thereby solving the insecurity problem of the payment environment caused by that the third-party application reads the verification code in the notification class information and send it to the payment server to pass the identity verification of the user of the payment operation may be solved, so as to improve the security of the payment environment.

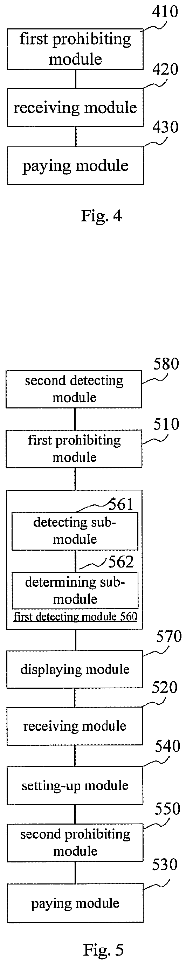

Fig. 4 is a block diagram showing a payment apparatus according to an illustrative embodiment of the present disclosure. In the present example, the payment apparatus takes the form of a terminal. As shown in Fig. 4, the payment apparatus includes: a first prohibiting module 410, a receiving module 420 and a paying module 430. The comments and embodiments described above in connection with a payment method may apply in an analogous manner to the payment apparatus of the present disclosure.

The first prohibiting module 410 is configured to prohibit a floating window from being displayed on an interface displayed by a payment application when the payment application is running on foreground.

The receiving module 420 is configured to receive a payment operation triggered by a user on the interface.

The paying module 430 is configured to pay in accordance with the payment operation received by the receiving module 420.

In conclusion, according to the payment apparatus provided by the present disclosure, by prohibiting the floating window from being displayed on the interface displayed by the payment application, the terminal may prohibit the fake interface, which is generated by the covering virus and similar to the interface displayed by the payment application, from being displayed when the payment application is running on foreground. Meanwhile, the user may input payment information on the true interface displayed by the payment application, thus the covering virus cannot acquire the payment information using the fake interface, so as to solve the insecurity problem of the payment environment caused by that the covering virus generates the fake interface covering the interface displayed by the payment application and acquires the payment information input on the fake interface by the user, thereby reaching the effect of improving the security of the payment environment.

Fig. 5 is a block diagram showing a payment apparatus according to an illustrative embodiment of the present disclosure. The payment apparatus is used in the terminal. As shown in Fig. 5, the payment apparatus includes: a first prohibiting module 510, a receiving module 520 and a paying module 530.

The first prohibiting module 510 is configured to prohibit a floating window from being displayed on an interface displayed by a payment application when the payment application is running on foreground.

The receiving module 520 is configured to receive a payment operation triggered by a user on the interface.

The paying module 530 is configured to pay in accordance with the payment operation received by the receiving module 520.

In a particular example, the first prohibiting module 510 is further configured to prohibit the floating window from being displayed on the interface displayed by the payment application via a predetermined system-level privilege.

In a particular example, the apparatus further includes: a setting-up module 540 and a second prohibiting module 550.

The setting-up module 540 is configured to set up a privilege for prohibiting a third-party application from reading notification class information, in which the third-part application is an application other than the payment application and a system application, and the notification class information is sent from a payment server to the payment application and configured to verify information of the user.

The second prohibiting module 550 is configured to prohibit the third-party application from reading the notification class information in accordance with the privilege set up by the setting-up module 540 when the payment application is running on the foreground.

In a particular example, the apparatus further includes: a first detecting module 560 and a displaying module 570.

The first detecting module 560 is configured to detect whether a virus is in the terminal (or payment apparatus) when the payment application is started, in which the virus is configured to steal information input by the user when the payment operation is triggered.

The displaying module 570 is configured to display a detecting result detected by the first detecting module 560 on the interface, in which the detecting result is configured to be provided to the user to determine whether to trigger the payment operation.

In a particular example, the first detecting module 560 includes a detecting sub-module 561 and a determining sub-module 562.

The detecting sub-module 561 is configured to detect whether an application carrying (or infected with) a virus is installed in the terminal, and to detect whether an application running on background receives information carrying (or infected with) a virus.

The determining sub-module 562 is configured to determine that the virus is in the terminal, when the application carrying (or infected with) a virus is detected by the detecting sub-module 561 to be installed in the terminal or when the application running on background is detected by the detecting sub-module 561 to receive information carrying a virus.

In a particular example, the apparatus further includes: a second detecting module 580.

The second detecting module 580 is configured to detect whether an application is the payment application when starting the application.

The first prohibiting module 510 is further configured to trigger an act of prohibiting the floating window from being displayed on the interface displayed by the payment application when the payment application is running on foreground, when the application is detected by the second detecting module 580 to be the payment application.

In conclusion, according to the payment apparatus provided by the present disclosure, by prohibiting the floating window from being displayed on the interface displayed by the payment application, the terminal may prohibit the fake interface, which is generated by the covering virus and similar to the interface displayed by the payment application, from being displayed when the payment application is running on foreground. Meanwhile, the user may input payment information on the true interface displayed by the payment application, thus the covering virus cannot acquire the payment information using the fake interface, so as to solve the insecurity problem of the payment environment caused by that the covering virus generates the fake interface covering the interface displayed by the payment application and acquires the payment information input on the fake interface by the user, thereby reaching the effect of improving the security of the payment environment.

In addition, by detecting whether the application is the payment application when starting the application, and by prohibiting the floating window from being displayed on the interface displayed by the payment application when the application is detected to be the payment application, the terminal will only prohibit the floating window from being displayed on the interface displayed by the payment application when the application running on foreground is the payment application, thus ensuring the security of the payment without prohibiting the floating window from being displayed by other applications in the terminal and improving flexibility of prohibiting the floating window from be displayed by the terminal.

In addition, by detecting whether the virus is in the terminal when the payment application is started, and by displaying the detecting result on the interface displayed by the payment application, the user may implement the payment operation when the detecting results indicates that there is no virus in the terminal, thus improving the security of the payment environment.

In addition, by setting up the privilege for prohibiting the third-party application from reading notification class information, and by prohibiting the third-party application from reading the notification class information in accordance with the privilege when the payment application is running on the foreground, even if the third-party application acquires the account and the password of the user, it may still cannot read a verification code in the notification class information because it cannot read the notification class information received by the terminal, thus the third-party application cannot send the verification code matching with the account and the password of the user to the payment server and the identity verification of the user of the payment operation by the payment server is not passed, thereby solving the insecurity problem of the payment environment caused by that the third-party application reads the verification code in the notification class information and send it to the payment server to pass the identity verification of the user of the payment operation may be solved, so as to improve the security of the payment environment.

With respect to the apparatuses in the above embodiments, the specific manners for performing operations for individual modules therein have been described in detail in the embodiments regarding the methods, which are not elaborated herein again.

According to an illustrative embodiment of the present disclosure, a payment device is provided to realize the payment method provided by the disclosure, and the payment device includes: a processor; a memory configured to store instructions to be implemented by the processor,
in which the processor is configured to:
prohibit a floating window from being displayed on an interface displayed by a payment application when the payment application is running on foreground;
receive a payment operation triggered by a user on the interface; and
pay in accordance with the payment operation.

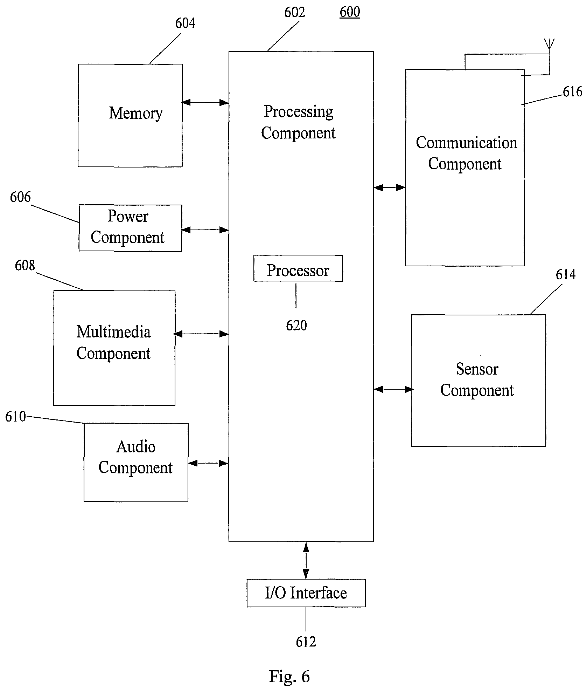

Fig. 6 is a block diagram of a payment device 600 according to an illustrative embodiment. For example, the device 600 may be a mobile phone, a computer, a tablet device, a Personal Digital Assistant PDA, etc.

Referring to Fig. 6, the device 600 may include the following one or more components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 608 includes a front camera and/or a rear camera. The front camera and the rear camera may receive external multimedia data while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the intelligent device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface for the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600 and relative positioning of components (e.g. the display and the keypad of the device 600). The sensor component 614 may also detect a change in position of the device 600 or of a component in the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate wired or wireless communication between the device 600 and other devices. The device 600 can access a wireless network based on a communication standard, such as WIFI, 2G, or 3G, or a combination thereof. In one illustrative embodiment, the communication component 616 receives a broadcast signal or broadcast associated information from an external broadcast management system via a broadcast channel. In one illustrative embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer readable storage medium including instructions, such as the memory 604 including instructions. The above instructions are executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A payment method implemented by a terminal, said method being **characterised in that** it comprises:
prohibiting (101) a floating window from being displayed on an interface displayed by a payment application when the payment application is running on foreground;
receiving (102; 205) a payment operation triggered by a user on the interface;
paying (103; 206) in accordance with the payment operation.

2. The method according to claim 1, wherein prohibiting (101) a floating window from being displayed on an interface displayed by a payment application comprises:
prohibiting (202) the floating window from being displayed on the interface displayed by the payment application via a predetermined system-level privilege.

3. The method according to claim 1 or 2, further comprising:
setting up (301) a privilege for prohibiting a third-party application from reading notification class information, wherein the third-part application is an application other than the payment application and a system application, and the notification class information is sent from a payment server to the payment application and configured to verify information of the user;
prohibiting (302) the third-party application from reading the notification class information in accordance with the privilege when the payment application is running on the foreground.

4. The method according to any one of claims 1 to 3, further comprising:
detecting (203) whether a virus is in the terminal when the payment application is started, wherein the virus is configured to steal information input by the user when the payment operation is triggered;
displaying (204) a detecting result on the interface, wherein the detecting result is configured to be provided to the user to determine whether to trigger the payment operation.

5. The method according to claim 4, wherein detecting (203) whether a virus is in the terminal comprises:
detecting whether an application carrying a virus is installed in the terminal, and detecting whether an application running on background receives information carrying a virus;
determining that the virus is in the terminal, when the application carrying a virus is detected to be installed in the terminal or the application running on background is detected to receive information carrying a virus.

6. The method according to any one of claims 1 to 5, further comprising:
detecting (201) whether an application is the payment application when starting the application;
triggering (202) an act of prohibiting the floating window from being displayed on the interface displayed by the payment application when the payment application is running on foreground, when the application is detected to be the payment application.

7. A payment apparatus, **characterised in that** it comprises:
a first prohibiting module (410; 510) configured to prohibit a floating window from being displayed on an interface displayed by a payment application when the payment application is running on foreground;
a receiving module (420; 520) configured to receive a payment operation triggered by a user on the interface;
a paying module (430; 530) configured to pay in accordance with the payment operation received by the receiving module (420; 520).

8. The apparatus according to claim 7, wherein the first prohibiting module (410; 510) is further configured to prohibit the floating window from being displayed on the interface displayed by the payment application via a predetermined system-level privilege.

9. The apparatus according to claim 7 or 8, further comprising:
a setting-up module (540) configured to set up a privilege for prohibiting a third-party application from reading notification class information, wherein the third-part application is an application other than the payment application and a system application, and the notification class information is sent from a payment server to the payment application and configured to verify information of the user;
a second prohibiting module (550) configured to prohibit the third-party application from reading the notification class information in accordance with the privilege set up by the setting-up module (540) when the payment application is running on the foreground.

10. The apparatus according to any one of claims 7 to 9, further comprising:
a first detecting module (560) configured to detect whether a virus is in the payment apparatus when the payment application is started, wherein the virus is configured to steal information input by the user when the payment operation is triggered;
a displaying module (570) configured to display a detecting result detected by the first detecting module (560) on the interface, wherein the detecting result is configured to be provided to the user to determine whether to trigger the payment operation.

11. The apparatus according to claim 10, wherein the first detecting module (560) comprises:
a detecting sub-module (561) configured to detect whether an application carrying a virus is installed in the terminal, and to detect whether an application running on background receives information carrying a virus;
a determining sub-module (562) configured to determine that the virus is in the terminal, when the application carrying a virus is detected by the detecting sub-module (561) to be installed in the terminal or when the application running on background is detected by the detecting sub-module (561) to receive information carrying a virus.

12. The apparatus according to any one of claims 7 to 11, further comprising:
a second detecting module (580) configured to detect whether an application is the payment application when starting the application,
wherein the first prohibiting module (410; 510) is further configured to trigger an act of prohibiting the floating window from being displayed on the interface displayed by the payment application when the payment application is running on foreground, when the application is detected by the second detecting module (580) to be the payment application.

13. A computer program including instructions for executing the steps of a payment method according to any one of claims 1 to 6 when said program is executed by a computer.

14. A recording medium readable by a computer and having recorded thereon a computer program including instructions for executing the steps of a payment method according to any one of claims 1 to 6.
